# EUROPEAN PATENT APPLICATION

(11) **EP 1 744 527 A1**
(43) Date of publication of application: **17.01.2007**
(21) Application number: 05291524.6
(22) Date of filing: 13.07.2005
(51) Int. Cl.: H04M 3/493, H04M 7/00, H04M 1/2745

(54) **Method of establishing a telecommunication link**

(71) Applicant: ALCATEL, 75008 Paris (FR)
(72) Inventor: Satzke, Klaus, Dr., 71732 Tamm (DE); Wahl, Stefan, Dipl.-Ing., 71701 Schwieberdingen (DE); Lalble, Volker, Dipl.-Ing., 70469 Stuttgart (DE)
(74) Representative: LOUIS, PÖHLAU, LOHRENTZ

(57) **Abstract**

The invention concerns a method of establishing a telecommunication link and an application server (60) with a control unit (61, 610, 620) for the execution of said method. The method comprises the steps of creating and storing a user profile of the called party (20), determining a presence state of the called party (20), sending a service request specifying the called party (20) from a telecommunication unit (11, 12) of the calling party (10) to the application server (60), creating a personal calling card of the called party (20), presenting the personal calling card at the telecommunication unit (11, 12) of the calling party (10), and providing a telecommunication link via a telecommunication service (125) and/or IT service (115) of the calling party (10) and a selected telecommunication service (210, 211, 220, 230, 240, 250, 251) and/or IT service (212, 213, 222) of the called party (20) based on selection information received from the calling party (10).

## Description

The invention relates to a method of establishing a telecommunication link and an application server for executing the method.

Today, people can be contacted via multiple communication services such as, for example, IM, SMS, email, fax, telephone calls to fixed or mobile terminals, etc. (IM = Instant Messaging; SMS = Short Message Service). For the user, it is difficult to manage the multiplicity and concurrency of text, voice and video enabled devices.

For example, today's workforce is armed with a large number of different business and private communication tools, services and devices such as PDA, cell phone, home/work PSTN phone, home/work voice mail, fax, notebook, multimedia PC, email, IM devices, etc. (PDA = Personal Digital Assistant; PSTN = Public Switched Telephone Network; PC = Personal Computer). Workers say that a greater number of communication devices create new productivity dilemmas and have not made it easier for workers to connect.

The main problems often mentioned are that workers leave multiple messages in different places or place multiple calls when seeking immediate response, making it difficult for the called party to keep on track with his multiple messaging tools. What is more, decisions are delayed because of lacking synchronisation among various communication tools. Moreover, communication is often received as intrusive because it addresses an inappropriate device for the called party's context, e.g., a mobile phone call while driving a car.

Unified Communications solutions offer their users in the business/enterprise environment to integrate typical desktop applications with some communication tools such as IM, email, voice mail, and most recently PSTN/voice calls in a relatively simple manner. These products address mainly the enterprise market and require the installation of corresponding enterprise-class infrastructure like, e.g., IP-enabled PBX and/or IT communication servers (IP = Internet Protocol; PBX = Private Branch Exchange; IT = Information Technology).

These products are offered as proprietary solutions and realised as extensions of PBX products of the same manufacturer. The non-business user without access to these business-class PBX products is excluded from the usage of such applications. Additionally, these tools do not support a caller in selecting the most suitable communication tool for a certain contact.

It is the object of the present invention to provide an improved method of establishing a telecommunication link.

The object of the present invention is achieved by a method of establishing a telecommunication link via a telecommunication service and an IT service, respectively, of a calling party and one of a plurality of telecommunication services and IT services, respectively, of a called party, wherein the method comprises the steps of creating and storing a user profile of the called party, wherein the user profile defines one or more telecommunication services and IT services, respectively, of the plurality of telecommunication services and IT services, respectively, of the called party for establishing the telecommunication link in dependence of a presence state of the called party and an identity of the calling party, determining the presence state of the called party, sending a service request specifying the called party from a telecommunication unit of the calling party to an application server, analysing the service request and creating a personal calling card of the called party in consideration of the user profile of the called party, wherein the personal calling card specifies one or more appropriate telecommunication services and IT services, respectively, for contacting the called party, presenting the personal calling card at the telecommunication unit of the calling party for selection of one of said one or more appropriate telecommunication services and IT services, respectively, and providing a telecommunication link via the telecommunication service and IT service, respectively, of the calling party and the selected telecommunication service and IT service, respectively, of the called party based on the selection information received from the calling party. The object of the present invention is further achieved by an application server for establishing a telecommunication link via a telecommunication service and an IT service, respectively, of a calling party and one of a plurality of telecommunication services and IT services, respectively, of a called party, wherein the application server comprises a control unit for creating a user profile of the called party to be stored in a user profile data base, wherein the user profile defines one or more telecommunication services and IT services, respectively, of the plurality of telecommunication services and IT services, respectively, of the called party for establishing the telecommunication link in dependence of a presence state of the called party and an identity of the calling party, receiving information about the presence state of the called party, receiving a service request specifying the called party from a telecommunication unit of the calling party, analysing the service request and creating a personal calling card of the called party in consideration of the user profile of the called party, wherein the personal calling card specifies one or more appropriate telecommunication services and IT services, respectively, for contacting the called party, triggering the presentation of the personal calling card at the telecommunication unit of the calling party for selection of one of said one or more appropriate telecommunication services and IT services, respectively, and initiating the provision of a telecommunication link via the telecommunication service and IT service, respectively, of the calling party and the selected telecommunication service and IT service, respectively, of the called party based on the selection information received from the calling party.

The invention provides a single, controlled contact point for all telecommunication devices and tools of the called party. The personal calling card (= PCC) displays all communication and IT services, channels and tools available for the calling party according to the called party's presence and/or preference status, preferably in real-time or near real-time, and operates accross providers and network domains. The PCC provides a bundling of the private and office personal communication and IT services such as fixed and mobile phones, email, IM, SMS, etc. on a single point, e.g., a web/WAP page or window (WAP = Wireless Access Protocol). The calling party can select between different contact channels , e.g., by simply clicking on a correspondent icon which is available. Presence and preference information can also be shown to legacy users applying the Personal Calling Card.

In order to make the PCC service useable for the calling party, only the called party needs to subscribe to the service. For the calling party, the PCC provides support in finding the most suitable communication tool for the contact in question and offers several interfaces, i.e., web/WAP interfaces, voice-guided menus for legacy users.

The PCC enables a new kind of handling of personal IT and communication tools, such as voice, IM, email, etc. The called party can define policies and preferences with respect to users/groups, so that the calling party can concentrate on contacting the called party and not on organising and keeping track of contact information. For the calling party, the PCC provides support for finding the best communication tool for the contact in question.

Today, a telephone number represents an analogue or an ISDN line, and telephone set, or - in the mobile technology - a mobile phone. With the PCC concept, however, a PCC access address such as a URI represents a personalised PCC/application server instance with an intelligence of its own. A subscriber may use any terminal or connection to authenticate himself to the application server. The application server determines the media capabilities of the one or more terminal of the user and sets up a current network presence which is immediately made available to watchers, who may become calling parties when they decide to get connected to the subscriber.

A call incoming from any of the watchers always first arrives at the application server that decides with consideration of rules, the knowledge of the terminal the subscriber has authenticated himself with, the subscriber's activity, mood, etc. to forward the call to an appropriate subscriber's terminal, possibly with the help of conversion services.

The called party is empowered to better control and synchronise his communication tools avoiding multiple, intrusive or unwished calls.

Further advantages are achieved by the embodiments of the invention indicated by the dependent claims.

According to a preferred embodiment of the invention, the establishment of a connection between a telecommunication unit of the calling party and a telecommunication unit associated with the selected telecommunication service of the called party is triggered by sending a call request to a call control server. Preferably, the call request to the call control server is sent from the application server. The application server selects the appropriate call control server and creates the call request based on the user profile of the called party, the service request of the calling party, and the selection information received from the calling party. The call request comprises all data necessary for the setup of a communication connection through the networks such as the telecommunication addresses and communication preferences of the calling party and the called party.

The PCC is the starting point for any type of personal communication. After selecting the person one wants to contact or communicate with, e.g., from a network-based directory, the PCC will provide a list of suitable and available communication tools appropriate for successfully calling the person. According to a preferred embodiment of the invention, the one or more appropriate telecommunication services are indicated by icons on the personal calling card, when presenting the personal calling card at the telecommunication unit of the calling party.

The user, i.e., the called party can assign calling parties to different "watcher groups". Policies that apply to these watcher groups can also be defined by the user. These policies define which watcher group can reach which of the called party's communication services and devices. The PCC's external view changes according to the caller group as identified by the PCC. For example, a VIP caller can be provided with a larger amount of personal communication services than an unknown caller who is offered only a voice mail.

Depending on the watcher group, the PCC displays a number of icons corresponding to the personal communication services of the user, i.e., the called party, such as voice mail, IM, email, video call, which are currently accessible and authorised for the calling party.

The caller can select between different contact channels by simply clicking on the correspondent icon which is available. On selection of one of the icons, preferably by clicking on the icon by means of a computer mouse ("click-to-dial"), the provision of a telecommunication link via the telecommunication service of the calling party and the selected telecommunication service of the called party is triggered. Thus, the PCC allows also a legacy user, e.g., a PSTN calling party to use the presence information of a called party.

Preferably, when presenting the personal calling card at the telecommunication unit of the calling party, presence information of the called party is indicated on the personal calling card. The PCC may display presence information of the called party, such as "in the office", "busy", "at lunch", "out of office". The amount of presence information displayed to the calling party is controlled by the group policy as defined above. In a preferred embodiment, the calling party provides information on his availability, situation, context, location, etc. on his PCC. This information is provided under consideration of the called party's relationship to the calling party, his current context, and potential preferences, rules and moods of the called party.

For instance, the PCC may reflect the fact that the called party is in a telephone call in a different form on the PCC, depending on whether the calling party is anybody or the called party's boss. In the first case, the PCC may indicate "currently busy" or "not available via voice services", while in the latter case, the PCC may indicate "available via all services", and override, i.e. suspend the current (subordinate) call for the boss's call.

In a preferred embodiment, the local time of the present location of the called party is also displayed on the PCC. Thus, the calling party is provided with information whether it may be suitable to contact the called party via a real-time communication service like telephone or rather use a non-real-time communication service such as email, e.g., as the called party may be sleeping. This may be particularly useful in case the called party is often changing his location, e.g., travelling abroad to countries of different time zones, or in case the calling party and the called party are located in different time zones.

The local time information may be achieved by the control unit of the application server consulting an presence handler unit determining the location of the called party. The presence handler unit may use the location information to look up a a time zone server and/or a time zone data base which provides the current local time for a given location, e.g., presented as a geographic coordinate information, a GPS signal, or as an international telephone number (GPS = Global Positioning System).

According to another preferred embodiment of the invention, said user profile further takes into account preferences and/or user activity of the called party. The application server exchanges information with a presence handler unit. The presence handler unit contains an activity observer monitoring personal communication and registration/authentication processes, allowing to give contact additional and activity-based attributes, e.g., the last successful use. The presence handler unit registers device usage and updates the user presence and profile data bases accordingly so that, e.g., currently busy devices are displayed by the PCC accordingly. For example, the presence handler unit monitors the usage of the home PSTN phone of the called party and the PCC displays the PSTN tool as busy, e.g., marked in different colour on the PCC. Or, the presence handler unit registers lacking keyboard activity and notifies the control unit of the application server that, according to the called party's predefined policies, the called party's calls are now to be routed to the called party's PDA. With the integration of position / person identification systems such as RFID, a practically continuous availability, possibly with restrictions, of the called party may be achieved (RFID = Radio Frequency Identification).

The user profile represents an aggregation of all rules concerning the presentation of the called party's PCC to the calling party. Beside location, presence, context, etc. of the called party, the rules may also take into account external conditions such as weather conditions, workload of the network, service charges, etc. These conditions may be monitored by external units which are adapted to communicate with the application server.

Preferably, the personal calling card is presented at the telecommunication unit of the calling party via a web based browser or a WAP based browser. The application server is a network based service which provides the information displayed by the PCC to any but especially legacy users to facilitate the interworking with the upcoming NGN (NGN = Next Generation Network). The application server provides a HTML interface via the PCC in order to display the PCC to the calling party, e.g., as a web/WAP page (HTML = HyperText Markup Language). The caller interaction received via the PCC is accepted by the control unit of the application server in order to establish the required connectivity to a selected tool on caller's request, taking into account the called party's preferences.

According to an other preferred embodiment, the PCC data are transferred from the application server to the calling party in a presentation independent format such as XML (XML = extensible Markup Language). This enables the calling party to preprocess the PCC data according to his preferences and adapt the presentation of the PCC in a personalised way.

For accessing the PCC, the legacy user needs only a web/WAP browser. The PCC provides a legacy user with the presence information of the called party and allows the legacy user to set up a connection without further knowledge of the PSTN details, such as key sequences for certain telephony features, etc., enabling, e.g., click to dial.

Employing the method, i.e., the PCC service, the calling party does not have to bother with finding the best communication tools. The PCC is the front end of a general service architecture placed on public Internet or Intranet servers. According to another preferred embodiment of the invention, the signalling and bearer data associated with the service request and/or the telecommunication link are adapted if the telecommunication service of the calling party and the selected telecommunication service of the called party are different. Incoming signalling and bearer data are converted from one service / endpoint technology to another service / endpoint technology used by the destination unit. For example, data of an incoming fax is converted to email format.

Preferably, the personal calling card of the called party is adapted to assume a different layout and/or to display different amounts of telecommunication related information in dependence of the identity of the calling party. Particularly, the personal calling card specifies different appropriate telecommunication services of the called party, depending on the identity of the calling party. The profile data stored in the user profile data base enables the personal node to decide whom to provide with which amount of contact and presence information, and whom to allow which kind of connection to the personal communication/data tools. A VIP calling party will be offered a more direct connection to the called party and/or more comprehensive contact information than any unidentified caller.

The control unit of the application server manages the contact information such as home, office, mobile phone numbers, email addresses, buddy lists, etc. and stores them on the user profile data base. Thus, the control unit of the application server performs and displays the integration of the different communication capabilities (IT or telecommunications) and offers to the caller only an intelligent selection of tools that are available for calling the person in question.

Also, the control unit of the application server, in conjunction with the presence handler, enables publication of pre-defined and, e.g., customisable Rich Presence information such as "out to lunch", "in transit", "busy". The application server has access to data bases providing information on personal contact information such as all of a called party's fixed/mobile phone numbers, IM/SIP URLs, further device information such as IP addresses of text/data devices, etc. (SIP = Session Initiation Protocol; URL = Uniform Resource Locator). Additionally, a data base holds the preference rules/policies of the called party with respect to his pre-defined calling parties or calling party groups.

According to another preferred embodiment of the invention, the application server provides a service specific answering machine if the called party is not reachable. Therefore, the invention truly provides a starting point for any type of personal communication.

The architecture of the application server may be optimised for large companies with thousands of employees because of the application server providing a network hosted service instead of a clients-based presence management system. Therefore, the application server is not only an application but a network service for every employee. Scalability is achieved, due to several architectural facts:

The application server gets messages from the presence handler unit whenever the called party registers/unregisters a device or starts/ends a connection. These are pushed messages with a low rate of many seconds between messages.

The application server gets the new full presence information of only one called party and calculates for every preference priority group the group individual presence information. As there are normally a limited number of preference user groups (e.g. below thirty), the processing effort is acceptable.

The number of watchers (contact persons) for this called party may me several hundreds. Each of these persons are assigned to one of the preference groups. So, the presence information calculated for the groups has to be sent to the watchers (push). Hereby, the application server can take into account whether the presence information for this group has been changed.

In summary, the application server gets new presence information every n seconds - calculates for a small number of preference groups (e.g. below thirty) the new presence information - and generates every n seconds some hundred of messages to the watchers. The network service may be running on any computer. By this, the total load/processing power/data base accesses can be distributed.

A further advantage of the application server network service is that this service can also be used by mobile/remote workers without fixed assigned office. They experience the same working (data, communication) environment anywhere on any device because the control unit of the application server is their logical device, which is visible around the world. The user's devices or applications on his devices are only application server frontends.

The control unit of the application server is a logical multi-service/media endpoint representing one unique person (or a service). This virtual multi-service/media endpoint behaves according to the user's rules if the user has switched off all his communication devices and applications. As soon as the user switches on one or several communication devices/applications he is on control and signalling level connected to his control unit (via the presence handler unit) and the control unit of the application server identifies these devices/applications, updates the presence information, pushes the updates to the watchers.

These as well as further features and advantages of the invention will be better appreciated by reading the following detailed description of presently preferred exemplary embodiments taken in conjunction with accompanying drawings of which:
- Fig. 1: is a simplified block diagram of a system according to a first embodiment of the invention.
- Fig. 2: is a detailled block diagram of a system in analogy to the embodiment of Fig. 1.
- Fig. 3: is a table showing a user profile.
- Fig. 4: is a flow diagram according to a another embodiment of the invention.
- Fig. 5: is block diagram of a PCC according to another embodiment of the invention.

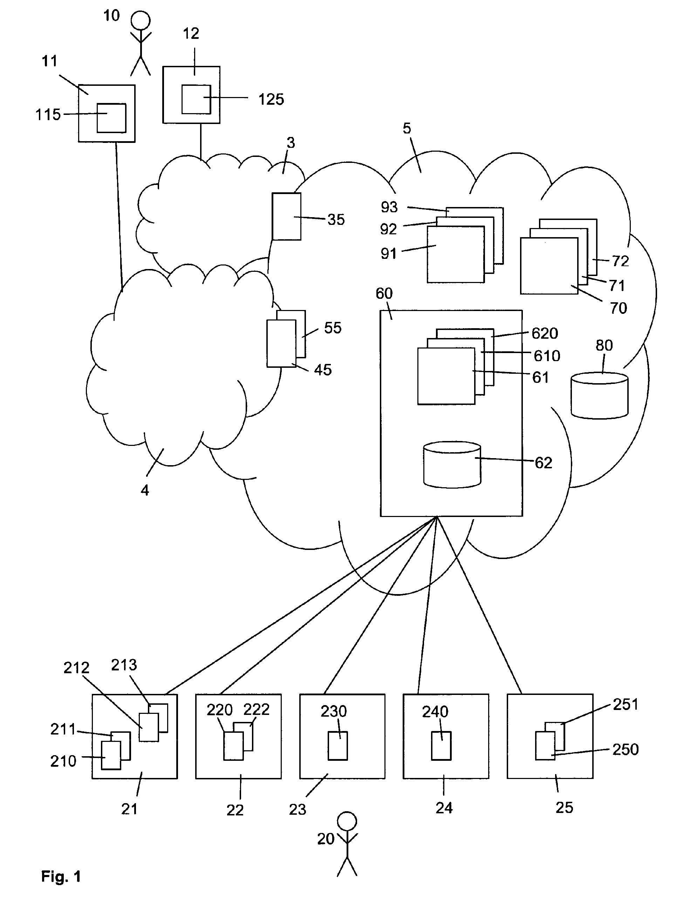

Fig. 1 shows a calling party 10 who wishes to get connected via a telecommunication connection to a called party 20. The calling party 10 may be a so-called "legacy user", i.e., a user who does not use state-of-the-art equipment but only well-known telecommunication tools such as a PSTN phone 12 and a PC 11 with a modem to connect to the Internet 4. On the other hand, the called party 20 is a technology aware user who has available a multitude of telecommunication tools 21 to 25 covering a wide range of telecommunication technologies such as an office PC 21 with modem for work email 210, work IM 211, and work data file management and exchange applications 212, 213, a private PC 22 with modem for private email 220 and private data file management and exchange application 222, a video conference telephone 23 for visual telephony 230, a PSTN phone 24 for conventional telephony 240, and a mobile telephone 25 for SMS 250 and cellular telephony 251.

The telecommunication tools 11, 12, 21 to 25 are connected to telecommunication networks 3, 4, 5. It is possible that the telecommunication network 3 comprises circuit-switched telephony networks, e.g., PSTN, ISDN, GSM, or UMTS networks. The telecommunication networks 4, 5 may be packet-switched networks, e.g., IP networks such as the Internet, or VolP networks (ISDN = Integrated Services Digital Network; GSM = Global System for Mobile Communication; UMTS = Universal Mobile Telecommunication Services; VoIP = Voice over Internet Protocol).

It is also possible that the networks 4, 5 comprise a NGN network, e.g., a 3GPP:IMS or an ETSI:TISPAN network (NGN = Next Generation Network; 3GPP = 3rd Generation Partnership Project; IMS = IP Multimedia Subsystem; ETSI = European Telecommunications Standards Institute; TISPAN = Telecommunications and Internet converged Services and Protocols for Advanced Networks).

The telecommunication networks 3, 4, and 5 are connected to each other by means of gateways 35, 45, 55. The gateways 35, 45, 55 are positioned at the interfaces of the telecommunication networks 3, 4, 5 to allow the data flow across the network borders. The networks 3, 4, 5 comprise network elements 91, 92, 93 for establishing telecommunication connections, such as call control servers, exchanges, switches, softswitches, trigger detection points, network nodes, etc. For example, in an IN architecture network such as SS7, the network elements 91, 92, 93 will comprise SSP and STP network units (IN = Intelligent Network; SS7 = Signalling System No. 7; SSP = Service Switching Point; STP = Signal Tranfer Point).

The telecommunication network 5 comprises an application server 60, such as a JBOSS/Apache application server, which is adapted to support the establishment of a telecommunication connection according to the invention. The application server 60 is constituted of one or several interlinked computers, a software platform and various application programs executed on the system platform provided by the aforementioned hardware and software platform. The functionalities of the application server 60 are performed by the execution of these software components by the hardware components of the application server 60. Preferably, the application server 60 according to the invention is installed as an independent network element. From a functional point of view, the application server 60 comprises one ore more control units 61, 610, 620 and a user profile data base 62. The application server 60 is interconnected with other servers 70 to 72 and another data base 80.

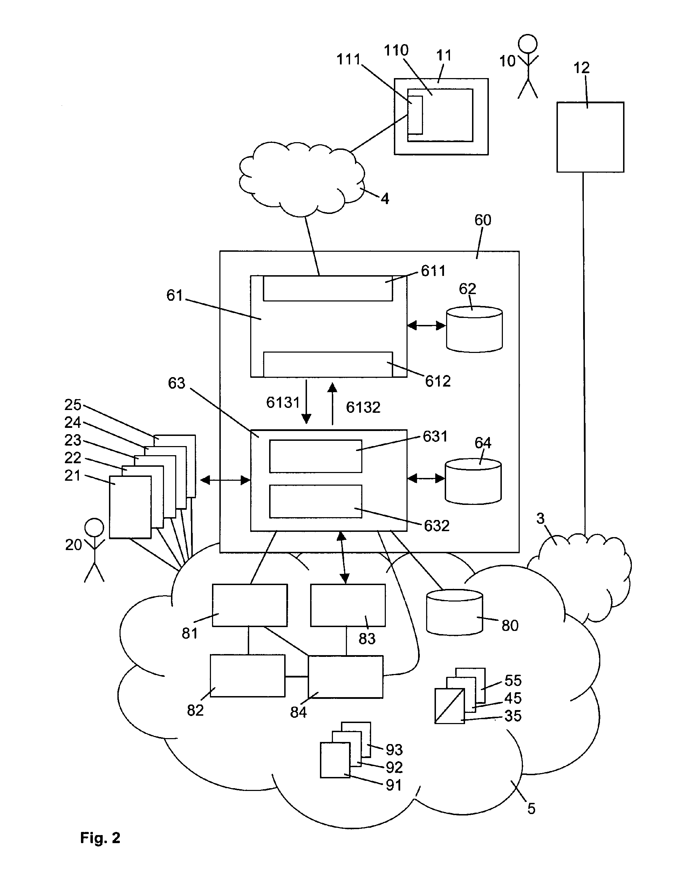

To simplify Fig. 1, only one calling party 10 and one called party 20 are shown. In reality, however, a multitude of calling and called parties will simultaneously use the networks to establish telecommunication links according to the invention. Each called party of the multitude of called parties is assigned to a personalised control unit 61, 610, 620 of the application server 60. Therefore, in a realisable preferred embodiment, the control units 61, 610, 620 personally assigned to the called parties 20 are not existent as physically integer and separate devices, but the functionality of the control units 61, 610, 620 is provided by one or more units 61, 610, 620 of the application server 60 only virtually in form of software running on the hardware units of the application server 60.An embodiment of an application server and a corresponding system in analogy to the system of Fig. 1 is described in more detail with help of Fig. 2. The calling party 10, having available a PSTN telephone set 12 and a PC 11, i.e., a browser client, wants to contact the called party 20 who is able to use any of the telecommunication tools 21 to 25. The PC 11 is connected to the Internet 4, the PSTN telephone set 12 is connected to the PSTN network 3. By means of the gateways 35, 45, 55, the telecommunication data from the telecommunication devices 11, 12, 21 to 25 can pass the borders of the networks 3, 4, 5. The gateways 35, 45, 55 act as interfaces between the networks 3, 4, 5 and may perform a translation between data according to the SS7, the IP and the PSTN technology.

From a functional point of view, the application server 60 comprises a personal communication assistant (= PCA) 61, a PCA data base 62, a co-located device assistant (= CDA) 63, and a CDA data base 64. The PCA 61 comprises interfaces 611, 612 for communication with external and internal units, e.g., a Perl/CGI interface 611 for communication with a browser 110 on the PC 11 and a SOAP interface 612 for communication with the CDA 63 (CGI = Common Gateway Interface; SOAP = Simple Object Access Protocol). The PCA 61 accesses the PCA data base 62 where user profile data of the called party 20 are stored. The communication with the browser 110, preferably working under HTML, is performed by the exchange of HTTP/UDP data via the Internet 4, whereby a Java applet 111 serves as an interface (HTTP = HyperText Transfer Protocol; UDP = User Datagram Protocol).

To simplify Fig.2, only PCA 61 is shown although there will be a multitude of similar PCAs with analogue functionality and acting in an equivalent manner.

The PCA 61 is a logical entity running on the application server 60 of the IMS/TISPAN network 5. The PCA 61 is assigned to one individual person, i.e., the called party 20 or one service, respectively, whereby the PCA 61 represents the called party 20 or the service, respectively. The PCA 61 runs as a network service which is accessible from any location around the world, from any network domain (IP, GSM, PSTN, ...) or device (IP = Internet Protocol). The PCA 61 represents the called party 20 or service, respectively, and offers only one unique identity for all kinds of services.

On his personal PCA 61, the called party 20 can subscribe services from different service providers, the subscribed services provided from external servers 81 to 84. The PCA 61 can combine those services in a user defined way, representing a personal service logic, so that a complex new service can be created which leads to a new service. For instance, the PCA 61 may serve as a service specific answering machine if the called party 20 is not reachable.

The CDA 63 comprises a CDA manager 631 and an activity observer 632 for monitoring the activity of the telecomunication tools 21 to 25 of the called party 20. The activity of the co-located telecomunication tools/devices 21 to 25 may be observed by a user activity observer client which transmits the current presence status, e.g., device ID, user ID, device states, via a JMS data connection to the CDA 63 (JMS = Java Messaging Service) and performs presence updates. The CDA 63 accesses a CDA data base 64 where presence related data are stored. Moreover, the CDA 63 is adapted to access a Rich Presence data base 80.

The CDA 63 aggregates and presentates presence information of presence sources in a meaningful way. The presence sources can be a group of devices and applications.

Via a JMS data connection, the CDA 63 communicates with SIP Servers like an extended SIP Server 81, e.g. a SIP Router, and a server of an audio conference room 82. Further, the CDA 63 communicates with a telephony server 83 and an associated SIP Server/IP enabled Voice Switch 84.

Between the PCA 61 and the CDA 63, there is exchange of data 6131, 6132. For example, preferences are sent via SOAP from the PCA 61 to the CDA 63. Or, a current presence status is transmitted from the CDA 63 via SOAP/XML to the PCA 61.

The presentation of the presence information is controlled via preferences and filtering. Different groups see the aggregated presence in different ways, e.g., co-workers see more detailled presence information that any external caller. The presence is dynamically adapted according to the called party's communication activity.

To start the service, the calling party 10 uses the browser 110 of his PC 11 to get connected with a service web site. By authenticating at the service web site, the identity of the calling party 10 is registered and used in the further steps of the service. The calling party 10 may choose a directory with potential communication partners. This directory may be a user-specific data base of communication partners, comparable to a calling party's phone book or it may be a directory of employees of a company. Each individual communication partner may be specified by name, position and with a photo.

The calling party 10 may select a specific communication partner, e.g., by mouse-clicking on his photo. This triggers the transfer of a service call from the calling party 10 to the application server 60. An incoming service call from the calling party 10 and addressed to a called party 20 first arrives at the PCA 61. The PCA 61 decides on the reachability of the called party 20 - defined by rules, user activity, capability of the authenticated devices, etc. - how the service is treated. In the easiest way, the called party 20 is authenticated with a device 21 to 25 which is capable to serve this service. In other cases, the PCA 61 has to involve adaptive functionalities applying web service techniques to accept the service.

The called party 20 can define the PCA 61 as master across domains and operators. This allows that the called party 20 may have contracts with different operators and service providers. The called party 20 informs that the PCA 61 is the communication master and by this the PCA 61 is always informed about all the activity of the called party 20, which allows any kind of session mobility.

The PCA 61 is the communication intelligence that can be dynamically extended by additional functionalities, e.g., by applying web service technologies or XML based technologies. These functionalities are applied in case of incoming or outgoing communication event depending on rules. Functionalities could be, e.g., personal schedulers, text-to-speech conversion, fax-to-email/SMS/MMS, MMS-to-MPEG-TS, personal and public phone book, personal data storage service, etc. (MMS = Multi-Media Messaging; MPEG = Motion Pictures Expert Group; TS = Transport Stream). Triggered by an event (incoming/outgoing communication call) the PCA 61 verifies, e.g., "Who is calling?", 'What is his subject?", "Do I wait for this call?", or other user defined conditions and decides how to further proceed with this event.

With the help of the PCA 61, the called party 20 does not need any more a personal communication or IT device, because he can force any device(s) for a certain time frame to serve as his own device by authenticating himself with this device at the PCA 61.

As soon as the called party 20 has authenticated himself with a device 21 to 25 at his PCA 61, the communication/service capabilities of the device 21 to 25 are evaluated and the appropriate entries in the CDA 63 are performed and the preference rules are extended. In case that the called party 61 is not authenticated with any device 21 to 25 at his PCA 61, it is possible that the PCA 61 automatically plays the role of a service specific answering machine.

The PCA 61 creates and/or updates a personal calling card which can be provided and displayed to the calling party 10, preferably on the web browser of the calling party 10. The PCC comprises information about the called party 20 such as preferred telecommunication channels to contact the called party 20 and preferably also presence information of the called party 20. The information specified on the PCC, e.g., the choice of telecommunication channels and the presence information of the called party 20, are adapted to the calling party 10 and the "watcher group" the calling party 10 is associated with, respectively. This adaption of the PCC is achieved by the application server 60 taking into account the user profile of the called party 20 and the identity of the calling party 10.

The calling party 10 chooses a preferred telecommunication service to reach the called party 20. For example, the calling party 10 may dial the telephone numbers of the wireline telephone set 24 of the called party 20 displayed on the PCC. In another embodiment, the calling party 10 may simply click on an icon assigned to a telecommunication channel available to the called party 20, e.g., a telephone icon. Then, the corresponding applications are triggered and a telecommunication link is automatically established, e.g., a telephone connection is automatically established between the telephone set 12 of the calling party 10 and the telephone set 24 of the called party 20 without any dialling action needed from the calling party 10 ("click-to-dial").

Preferably, a telecommunication connection is automatically established by sending a call request from the application server 60 to a call control server 91, 92, 93 of the networks 3, 4, 5 after clicking an icon on the PCC by the calling party 10.

Today and in the future, more and more users apply multiple devices and/or applications for communication. With the introduction of Rich Presence and Preference features the called party 20 has to take care that his presence information is always updated. For example, as soon as the called party 20 is in a phone call using one device, the presence of all other voice/video communication devices/applications must also change their presence information. The PCA 61 supports the called party 20 and takes care that the visible presence information is always consistent. This means that if the called party 20 is talking using one device, the PCA 61 will automatically change the presence information for all the other applications and devices, so that the calling party 10 also sees the updated presence of the called party 20 without any user intervention.

Preferably, the creation and corresponding presentation of the PCC is performed in real-time. Thus the presentation of available communication and IT services and tools of the called party 20 via the PCC to the calling party 10 reflects the latest and current state. In a preferred embodiment, the PCC is up-dated on change events such as the on-hook of the phone. But it may also be possible that the PCC is up-dated at fixed time intervals.

Depending on the caller group, the PCC displays a number special button allowing the caller to push a short voice message to the called party without establishing a voice call, i.e., a PTT button (PTT = Push to Talk).

In another embodiment of the invention, the PCA 61 may provide IT services. For instance, to a data file on a data file server may be assigned preference and presence rules, respectively, in a similar way as preference and presence rules, respectively, can be assigned to a telecommunication service. Data files are assigned to a preference group, e.g., a management group or a customer group whereby the data files - and preference groups - are assigned different priorities. Calling parties belonging to different preference groups with different priorities will see different data files, and access right associated to these data files, in addition to the telecommunication services and properties of the called party as described above.

Also a NFS service can be granted access to the data file server (NFS = Network File System). This way it is possible to define both communication work groups and IT work groups can be defined in the very same way. A subscriber to the PCA is enabled to manage a virtual firm with internal communication work groups and IT work groups, respectively. The IT server needs not be run in the PCA application server but may be a service to be subscribed to from an IT provider. The access to the data files, however, will be controlled by the PCA.

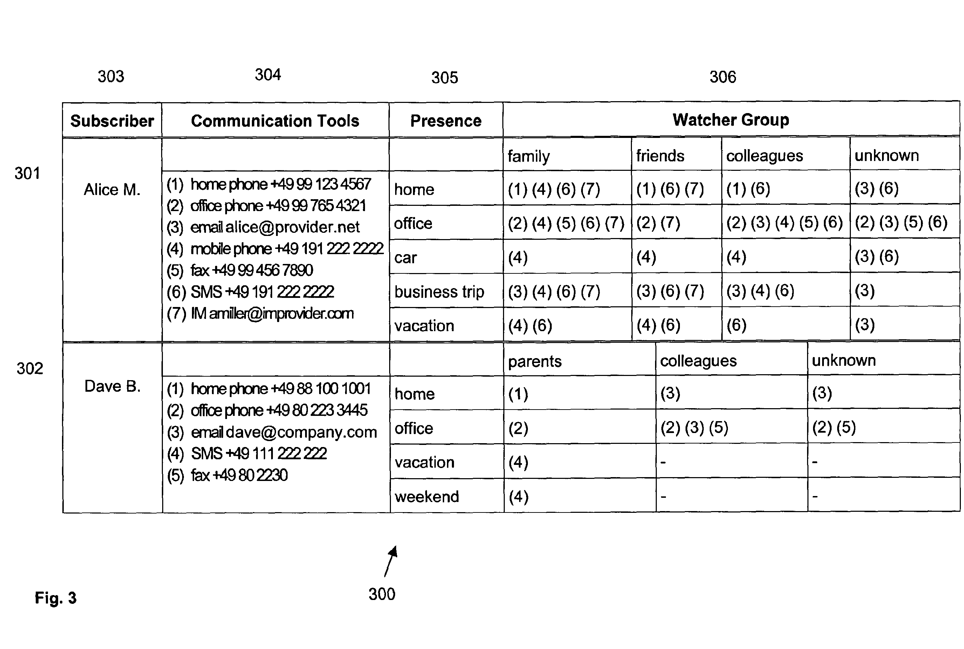

The PCA data base 62 comprises entries of the telecommunication subscribers, who want to offer a PCC to the calling party 10, in form of a user profile table 300 as shown in Fig. 3. The entries are created and up-dated by the subscribers of the service and the application server 60. Fig. 3 shows two entries 301, 302 assigned to two different subscribers as stored in the PCA data base 62. In the first column 303, the name of the subscribers is given. The exemplary user profile table 300 comprises the subscribers Alice M. and Dave B.

The second column 304 specifies the telecommunication tools available to the respective subscribers and the corresponding addresses of the telecommunication tools. For example, Alice may be contacted via seven different communication channels, viz. a wireline home phone, a wireline office phone, email, a mobile phone, fax, SMS, and IM. Dave may be contacted via five different communication channels, viz. a home phone, an office phone, email, SMS, and fax.

The third column 305 gives a list of possible presence states of the subscribers. Alice, e.g., has defined five presence states which cover most of her time, namely "home", "office, "car", "business trip", and "vacation".

Each person accessing the service and watching her PCC is classified into one of one or more caller categories, so-called "watcher groups", pre-defined by the subscribers. For example, the entry of Alice comprises four watcher groups, i.e., "family", "friends", "colleagues", and "unknown identity". By accessing the web based service via his browser, a watcher is identified and categorised into one of the four categories. Accordingly, the fourth column 306 comprises contact preferences of the subscribers with regard to the caller categories.

The PCA 61 provides external presence information for non SIP/SIMPLE aware contact persons using web/WAP technology (SIMPLE = SIP Instant Messaging and Presence Leveraging Extensions). For example, an external customer can browse the communication (former phone) directory of a company and get the presence information of any employee of the company. Hereby, it is important that the preference rules of each employee determine what presence information is provided to an external customer.

As shown in Fig. 3, if Alice is at home, she admits that a friend of hers may see her contact information for the communication tools #1, #6, and #7, viz. home phone, SMS, and IM, and may contact her via these communication tools. On the other hand, any un-identified watcher may be able to contact her at home only via the communication tools #3 and #6, viz. email and SMS. On vacation, any watcher categorised into the "family" watcher group is enabled to see the contact information and to establish contact via the communication tools #4 and #6, viz. her mobile phone and SMS, while colleagues of her can contact her by SMS, only.

Dave, who is less communicative than Alice, restricts an unknown watcher to see only his email address while Dave is at home. When Dave is in his office, he may be contacted by colleagues via the office phone, email and fax. His parents, though, may only call him on his office phone. On vacation and on weekends, Dave limits his reachability to his parents, who may contact him via SMS.

The current presence state of a subscriber is determined by the CDA 63. The activity observer 632 monitors personal communication and registration/authentication processes. The communication processes may be evaluated with additional and activity-based attributes, e.g., last successful use. The CDA 63 registers device usage and updates the CDA data base 64. Information of the CDA data base 64 is then transferred via data channel 6132 to the PCA 61 and used to update the PCA data base 62 accordingly so that, e.g., currently busy devices are displayed on the PCC accordingly.

For example, the CDA 63 monitors the usage of the home PSTN phone 25 of the called party 20 and the PCC displays the home PSTN phone 25 as busy, e.g., marked in a different colour on the PCC. Likewise, the CDA 63 registers lacking keyboard activity and notifies the PCA 61 that according to the called party's pre-defined policies his calls are now to be routed to a specific one of his telecommunication tools.

PCA allows the called party 20 to set his personal rules, e.g., in terms of IF THEN ELSE clauses such as "IF some state of event happens THEN do set or change one or more of my states and ... ELSE ...".

For example:
IF [one VoiceService == busy] THEN set all VoiceServices busy
IF [one VideoConferencingService == busy] THEN set all ...

So, the called party 20 can, e.g., allow that watchers from a higher preference group such as VIPs see him online, although he is talking to a person from a lower priority watcher group. But other watcher groups get a busy indication for voice communication, or even do not see any voice service possibility for contacting him. Rules also allow to define consequences to other media services. For example, a called party 20 is in a voice conversation and wants to indicate busy for video and voice but allows for instant text messaging.

Further rules are combining also preference priorities with service presence, for example:
IF [any VoiceService == busy] THEN
   IF [watcher is not of higher preference priority group] THEN all
   VoiceServices = busy ELSE
   VoiceService presence status unmodified

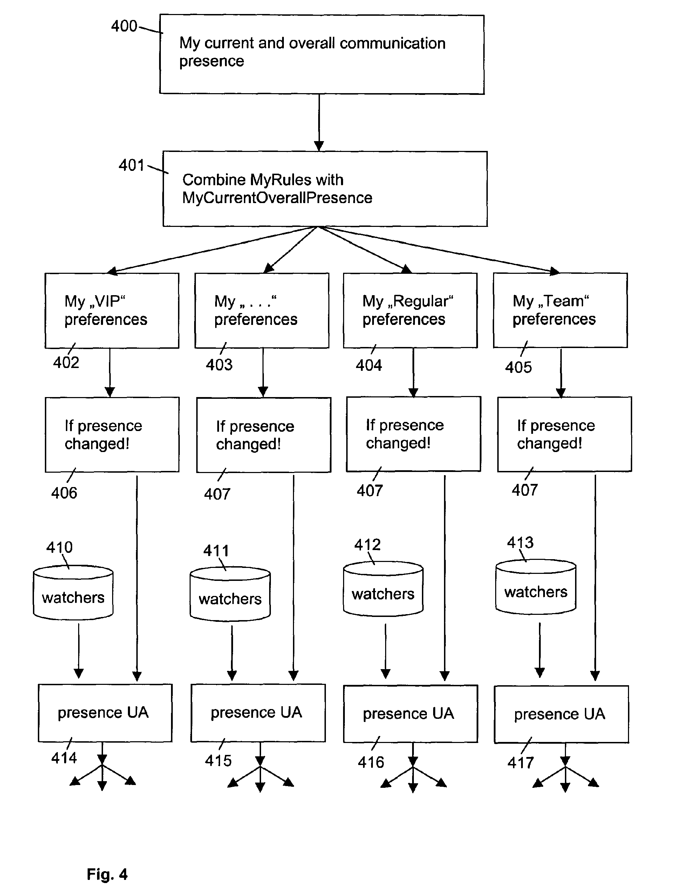

Fig. 4 shows in a flow diagram how a called party can manage these preference rules by himself, and the PCA 61 provides an attractive user interface. The called party can add or remove watcher groups with individual preference rules and sort any caller into one of these watcher groups. Any caller who is not found within one of these watcher groups is treated with the preference rules of the "any watcher" group's preference. Callers who are treated with "any watcher" group's preference are temporarily stored within this preference group, but these entries are aging and are removed from the group if there is no refresh.

In Fig. 4, the current and overall communication presence 400 of a called party concerning the plurality of his telecommunication services is modified, e.g., in case the called party answers picks up a telephone to answer a phone call. The reaction of the service to the change of the presence state is described by the conditional rules 401 which are triggered by the event on change. Depending on the conditional rules 401, for every watcher and preference group 402 to 405 a different set of preferences and rules applies. The presence information provided to the individual watcher groups has to be updated accordingly, as expressed in steps 406 to 409.

The active members of each watcher group 410 to 413 are identified and a set of update messages 414 to 417 are sent out, e.g., by pushing SIP/XML messages, to the telecommunication tools of the watcher group members where the presence information can be received.

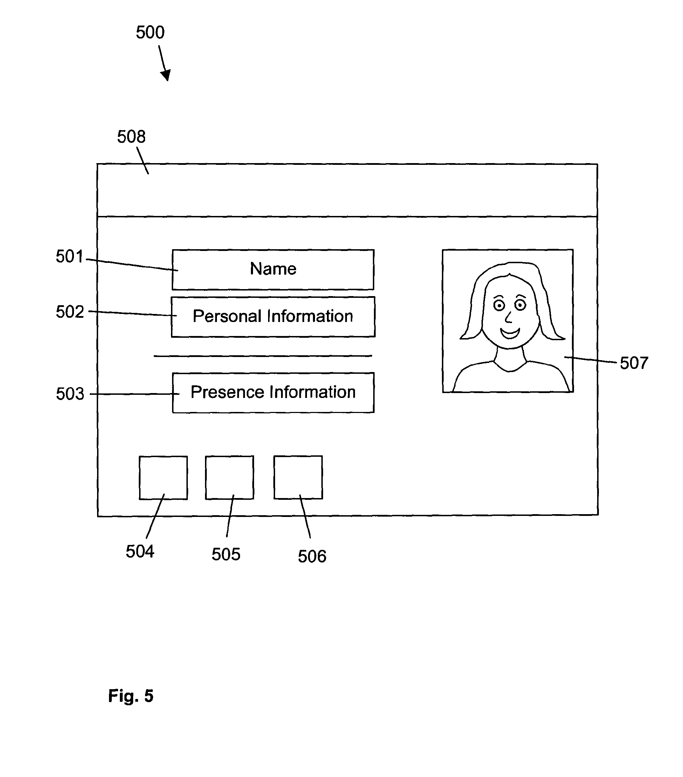

Fig. 5 shows an exemplary personal calling card (= PCC) 500 created by the application server 60. The PCC 500 comprises a name field 501, a personal information field 502, a presence information field 503, telecommunication tool icons 504 to 506, a picture field 507, and a toolbar 508.

Let us consider the case that Alice is driving in her car and someone wishes to call her. If the server 60 determines that the calling party 10 belongs to the watcher group "friends", the server 60 refers to Alice's user profile stored in the PCA data base 62, looks up the entry 301 of Alice and selects the data field in the intersection of the presence line "car" and the watcher group column "friends". The data field specifies "4", which means Alice's telecommunication tool #4, i.e., Alice's mobile phone number.

Accordingly, the calling party 10 is presented a PCC with Alice's name in the name field 501, a photo of her in the picture field 507, and additional personal information in the personal information field 502. In the considered case, only one of the telecommunication tool icons 504 to 506 is present, displaying an icon with a symbol of a mobile phone. If the calling party clicks on the icon, a connection between his telecommunication tool and Alice's mobile phone is automatically established ("click-to-dial"). Additionally, a toolbar may be provided in the field 508.

The personal information field 502 contains the personal information which was pre-defined by Alice in her user profile to be on display in dependence of the calling party's identity and Alice's presence. If, e.g., Alice is called in her office by a colleague in the same office building, her office room number may be displayed. If Alice is called in her office by someone without known identity, her function in the company such as "customer care" or a title may be displayed.

If an external calling party 10, who browses the communication directory, has only an analogue phone then he only uses the phone number information of the PCC displayed via web or WAP technology. But if the calling party 10 has SIP enabled communication applications running on his computer, he simply has to click on one of the shown application icons of the PCC and gets an connection to the employee. The icons on the PCC are not statically placed but appear and disappear with the service availability of this employee.

## Claims

1. A method of establishing a telecommunication link via a telecommunication service (125) and an IT service (115), respectively, of a calling party (10) and one of a plurality of telecommunication services (210, 211, 220, 230, 240, 250, 251) and IT services (212, 213, 222), respectively, of a called party (20),
**characterised in**
**that** the method comprises the steps of:
creating and storing a user profile of the called party (20), wherein the user profile defines one or more telecommunication services (210, 211, 220, 230, 240, 250, 251) and IT services (212, 213, 222), respectively, of the plurality of telecommunication services (210, 211, 220, 230, 240, 250, 251) and IT services (212, 213, 222), respectively, of the called party (20) for establishing the telecommunication link in dependence of a presence state of the called party (20) and an identity of the calling party (10);
determining the presence state of the called party (20);
sending a service request specifying the called party (20) from a telecommunication unit (11, 12) of the calling party (10) to an application server (60);
analysing the service request and creating a personal calling card of the called party (20) in consideration of the user profile of the called party (20), wherein the personal calling card specifies one or more appropriate telecommunication services (210, 211, 220, 230, 240, 250, 251) and IT services (212, 213, 222), respectively, for contacting the called party (20);
presenting the personal calling card at the telecommunication unit (11, 12) of the calling party (10) for selection of one of said one or more appropriate telecommunication services (210, 211, 220, 230, 240, 250, 251) and IT services (212, 213, 222), respectively; and
providing a telecommunication link via the telecommunication service (125) and IT service (115), respectively, of the calling party (10) and the selected telecommunication service (210, 211, 220, 230, 240, 250, 251) and IT service (212, 213, 222), respectively, of the called party (20) based on the selection information received from the calling party (10).

2. The method of claim 1,
**characterised in**
**that** the method further comprises the step of:
sending a call request from the application server (60) to a call control server (91, 92, 93) for establishing a telecommunication connection between a telecommunication unit (11, 12) of the calling party (10) and
a telecommunication unit (21 to 25) associated with the selected telecommunication service (210, 211, 220, 230, 240, 250, 251) and IT service (212, 213, 222), respectively, of the called party (20).

3. The method of claim 1,
**characterised in**
**that** the method further comprises the step of:
when presenting the personal calling card at the telecommunication unit (11, 12) of the calling party (10), indicating the one or more appropriate telecommunication services (210, 211, 220, 230, 240, 250, 251) and IT service (212, 213, 222), respectively, by icons on the personal calling card, whereby the selection of one of the icons, preferably by clicking on the icon by means of a computer mouse, triggers the provision of a telecommunication link via the telecommunication service (125) and IT service (115), respectively, of the calling party (10) and the selected telecommunication service (210, 211, 220, 230, 240, 250, 251) and IT service (212, 213, 222), respectively, of the called party (20).

4. The method of claim 1,
**characterised in**
**that** the method further comprises the step of:
when presenting the personal calling card at the telecommunication unit (11, 12) of the calling party (10), indicating presence information and/or location information and/or context information and/or mood information and/or a local time of the called party (20) on the personal calling card.

5. The method of claim 1,
**characterised i n**
**that** said user profile further takes into account preferences and/or user activity of the called party (20).

6. The method of claim 1,
**characterised in**
**that** the method further comprises the step of:
presenting the personal calling card at the telecommunication unit (11, 12) of the calling party (10) via a web and/or WAP based browser (110) or using a presentation independent format which allows the calling party (10) to customise the presentation of the personal calling card.

7. The method of claim 1,
**characterised in**
**that** the method further comprises the step of:
adapting the signalling and bearer data associated with the service request and/or the telecommunication link if the telecommunication service (125) and IT service (115), respectively, of the calling party (10) and the selected telecommunication service (210, 211, 220, 230, 240, 250, 251) and IT service (212, 213, 222), respectively, of the called party (20) are different.

8. The method of claim 1,
**characterised in**
**that** the method further comprises the step of:
creating a personal calling card of the called party (20) wherein the personal calling card is adapted to assume a different layout and/or display different amounts of telecommunication related information and/or specify different appropriate telecommunication services (210, 211, 220, 230, 240, 250, 251) and IT services (212, 213, 222), respectively, in dependence of the identity of the calling party (10).

9. An application server (60) for establishing a telecommunication link via a telecommunication service (125) and an IT service (115), respectively, of a calling party (10) and one of a plurality of telecommunication services (210, 211, 220, 230, 240, 250, 251) and IT services (212, 213, 222), respectively, of a called party (20),
**characterised in**
**that** the application server (60) comprises a control unit (61, 610, 620) for creating a user profile of the called party (20) to be stored in a user profile data base (62), wherein the user profile defines one or more telecommunication services (210, 211, 220, 230, 240, 250, 251) and IT services (212, 213, 222), respectively, of the plurality of telecommunication services (210, 211, 220, 230, 240, 250, 251) and IT services (212, 213, 222), respectively, of the called party (20) for establishing the telecommunication link in dependence of a presence state of the called party (20) and an identity of the calling party (10); receiving information about the presence state of the called party (20); receiving a service request specifying the called party (20) from a telecommunication unit (11, 12) of the calling party (10); analysing the service request and creating a personal calling card of the called party (20) in consideration of the user profile of the called party (20), wherein the personal calling card specifies one or more appropriate telecommunication services (210, 211, 220, 230, 240, 250, 251) and IT services (212, 213, 222), respectively, for contacting the called party (20); triggering the presentation of the personal calling card at the telecommunication unit (11, 12) of the calling party (10) for selection of one of said one or more appropriate telecommunication services (210, 211, 220, 230, 240, 250, 251) and IT services (212, 213, 222), respectively; and initiating the provision of a telecommunication link via the telecommunication service (125) and IT service (115), respectively, of the calling party (10) and the selected telecommunication service (210, 211, 220, 230, 240, 250, 251) and IT service (212, 213, 222), respectively, of the called party (20) based on the selection information received from the calling party (10).

10. The application server of claim 9,
**characterised in**
**that** the control unit (61, 610, 620) is adapted to co-operate with external servers (70 to 71) for providing additional telecommunication related services and IT related services, respectively.
